# EUROPÄISCHE PATENTSCHRIFT

(11) **EP 0 338 264 B1**
(45) Veröffentlichungstag und Bekanntmachung des Hinweises auf die Patenterteilung: **08.12.1993**
(21) Anmeldenummer: 89104990.0
(22) Anmeldetag: 21.03.1989
(51) Int. Cl.: B29C 67/18, B29C 63/00, B29C 65/00

(54) **Verfahren zum Verbinden von Holzwerkstoff mit Kunststoff**
Process for joining wood materials to plastics
Procédé pour la liaison de matériaux en bois avec de la matière plastique

(30) Priorität: 19.04.1988 DE 3813025
(43) Veröffentlichungstag der Anmeldung: 25.10.1989
(73) Patentinhaber: ERWIN BEHR GMBH & CO. KG, D-73237 Wendlingen (DE)
(72) Erfinder: Menke, Klaus, Dr., D-7520 Bruchsal (DE); Wollmann, Klaus, D-6250 Limburg 7 (DE); Best, Bernd, D-6082 Mörfelden-Walldorf (DE); Wiesert, Peter, D-6200 Wiesbaden 42 (DE)
(74) Vertreter: Gudel, Diether

(56) Entgegenhaltungen:
- CH-A- 356 381
- DE-A- 1 933 286
- DE-A- 2 422 978
- DE-A- 2 505 979
- FR-A- 596 783
- GB-A- 796 131
- NL-A- 264 672

## Beschreibung

Die Erfindung betrifft ein Verfahren zum Verbinden von Holzwerkstoff mit Kunststoff.

Soweit bekannt werden diese Materialien nach dem Stand der Technik miteinander verklebt. Die Klebeverbindung ist aber für viele Fälle nicht ausreichend belastbar.

Die deutsche Offenlegungsschrift 21 14 181 beschreibt ein Verfahren zum Verbinden von Fremdmaterial mit Kunststoff, wobei auf die mit dem Kunststoff zu verbindende Fläche des Fremdmaterials eine Verankerungsschicht aufgebracht und mit der betreffenden Fläche verklebt wird, die eine hohe spezifische Oberfläche hat und mit der der Kunststoff im Spritzgußverfahren verbunden wird. Dort werden Verkleidungsteile für Kraftfahrzeuge hergestellt, wobei eine Schaumstoffeinlage über ein Vlies mit dem Kunststoffmaterial verbunden wird. Hierzu wird die Schaumstoffeinlage mit aufgelegtem Vlies in eine Spritzform eingelegt und anschließend wird der Kunststoff in den Formhohlraum eingespritzt zur Verankerung und gleichzeitiger Verformung der Materialien miteinander.

Beim Erstarren unterliegt das Kunststoffmaterial aber einem Schwund. Bei dem dort durchgeführten gleichzeitigen Verbinden dieser Materialien miteinander ergeben sich daher Probleme aus dem Schwund des Kunststoffmaterials, insbesondere ein Verziehen der Teile (siehe GB-A-796 131).

Ausgehend von diesem Stand der Technik liegt der Erfindung die Aufgabe zugrunde, das vorbekannte Verfahren so zu führen, daß Holzwerkstoff mit dem Kunststoff dauerhaft und ohne Schwund verbunden werden kann.

Zur Lösung dieser Aufgabe ist die Erfindung dadurch gekennzeichnet, daß zum Verbinden von Holzwerkstoff mit dem Kunststoff zunächst das thermoplastische Kunststoffmaterial auf die Verankerungsschicht aufgespritzt und anschließend das so erhaltene Verbundmaterial mit dem Holzwerkstoffteil verklebt wird.

Durch diese Verfahrensführung vermeidet man Probleme, die mit dem Schwund beim Verarbeiten der Kunststoffmasse entstehen können.

Bedingt durch die hohe spezifische Oberfläche der Verankerungsschicht wird ein sehr guter Verbund zwischen dem aufgespritzten Kunststoffmaterial und der Verankerungsschicht erreicht, weil beim Spritzgußverfahren das Kunststoffmaterial tief in die Verankerungsschicht eindringen kann und diese gewissermaßen umspritzt. Andererseits gibt es allen Anforderungen genügende Kleber zum Verkleben der Fläche des Holzwerkstoffs mit der Verankerungsschicht.

Als derartige Verankerungsschichten sind insbesondere Gewebe oder Vliese geeignet, statt dessen oder zusätzlich aber auch grob gekörnte anorganische oder organische Füllstoffe. Allen diesen Verankerungsschichten ist es gemeinsam, daß sie im Spritzgußverfahren dem thermoplastischen Kunststoffmaterial eine hohe Oberfläche zur Adhesion und mechanischen Verankerung zur Verfügung stellen. Verwendet man grob gekörnte anorganische oder organische Füllstoffe, so werden diese über ein geeignetes Harzbindemittel mit dem Holzwerkstoff verklebt bzw. dauerhaft verbunden.

Durch die erfindungsgemäße Verfahrensführung lassen sich somit mechanisch stabile und auch temperaturstabile Verbundteile herstellen.

Das mit der Holzoberfläche zu verbindende Vlies oder Gewebe ist bevorzugt aus multifilamenten Naturfasern, aus Fasern zerklüfteter Oberfläche oder aus synthetischen Verbundfasern aufgebaut, deren äußere Hülle bei Berührung mit dem flüssigen thermoplastischen Kunststoff aufschmilzt und sich dabei mit der gespritzten Kunststoffmasse verbindet.

Das verwendete Gewebe oder Vlies soll für die Herstellung mechanisch und temperaturstabiler Verbundteile eine hohe Reiß-, Spalt- und Querzugsfestigkeit besitzen. Ein gewisses Elastizitäts- und Dehnungsvermögen ist erforderlich, um den Schrumpf der Kunststoffmasse beim Abkühlen aufzufangen und entsprechend nachzugeben.

Wird ein Verbundteil aus einem dickeren, steifen Holzteil hergestellt, so ist ein elastischer, vorzugsweise ein vernetzender Kautschukkleber zu verwenden, der den Schrumpf und die dabei entstehenden Spannungen auszugleichen vermag.

Um den Schrumpf der Kunststoffmasse und den Verzug von Spritzgußteilen zu mildern, kann als einzige oder zusätzliche Verankerungsschicht ein stabiles Glas- oder Mineralfasergewebe oder ein Vlies eingesetzt werden, wenn es die Forderung einer hohen Reiß- und vor allem Spaltfestigkeit erfüllt.

Wie alle anderen Schichten muß ein Glas- oder Mineralfasergewebe dabei von der Kunststoffmasse gut umflossen werden können und zu einer effektiven Verbindung führen.

Der Verstärkungseffekt, den ein solch umflossenes Glasgewebe auf das thermoplastische Polymermaterial ausübt, vermindert den Schrumpf weitgehend und verhindert den Verzug der Verbundteile, vor allem, wenn nur eine dünne Kunststoffschicht aufgespritzt wird.

Ein solches Glasgewebe oder Vlies kann vorteilhaft mit bekannten Klebstoffen auf der Basis von Epoxy-, Polyurethan-oder Acrylatharzen ebenso wie mit isocyanatvernetzten Nitril-, Isopren- oder Chloroprenkautschukklebern mit den zu verbindenden Holzteilen, Furnierholz oder bereits vorhandenen Gewebeschichten verklebt werden.

Die Verwendung eines Gewebes oder Vlieses aus synthetischen Verbundfasern, deren äußere Hülle aufschmilzt, ist nur bedingt für das erfindungsgemäße Verfahren geeignet. Bedingung für eine Verbindung mit dem gespritzten Polymermaterial ist, daß die aufschmelzende Faserhülle mit diesem verträglich ist und zumindest teilweise davon aufgenommen wird. Ein derartiges Gewebe ist jedoch, wenn es zur Verbindung von hydrophoben, antiadhäsiv wirkenden Polyolefinen, insbesondere Polypropylen herangezogen werden soll, im allgemeinen nicht mit ausreichender mechanischer Festigkeit und Temperaturstabilität mit Holz oder anderen Geweben verklebbar.

Zusammen mit Epoxy-,Polyurethan-, Acrylat- oder vernetzten Kautschukklebern lassen sich vorteilhaft mono- oder gemischtfaserige Baumwoll-, Wolle-, Polyester- oder Zellstoffgewebe in einer Stärke von ca. 10 bis 500 g/m², vorzugsweise 50 bis 300 g/m², einsetzen.

Bei Verwendung eines flüssigen, das Vlies oder Gewebe teilweise durchdringenden Klebstoffes sind die Anforderungen an ausreichender Reiß- und Spaltfestigkeit geringer, um eine gute Haftfestigkeit und stabilen Verbund herzustellen. Wird dagegen ein duroplastisch aushärtender Klebstoffilm auf der Basis von Phenol-Harnstoff- oder Epoxyharzen verwendet, sind wesentlich höhere Festigkeiten und Flächengewichte von mindestens 60 g/m² zur Herstellung eines stabilen Verbundes notwendig.

Wird ein Vlies oder Gewebe in Stütz- und Verankerungsfunktion über einen duroplastisch aushärtenden Klebstoffilm, z.B. mit Furnierholz verklebt, so ist durch das damit verbundene Aufpressen die Verankerungswirkung beim nachfolgenden Spritzvorgang häufig nicht in ausreichendem Maße gegeben. In diesem Fall kann eine gute Verbindung vorteilhaft durch Aufkleben einer zweiten Lage stabilen Glasfasergewebes oder Vlieses mit den schon erwähnten Flüssigklebstoffen oder durch Auftragen eines Haftvermittlers mit grobkörnigem, bevorzugt anorganischen Füllstoffmaterials hergestellt werden. Ein solcher Haftvermittler ist aus einem flüssigen, gelösten ein- oder zweikomponenten Natur-oder Kunstharz mit guter Haftwirkung auf dem zu beschichtenden Gewebe- oder Holzteil und einem harten anorganischen oder nichtschmelzenden temperaturstabilen polymeren organischen Füllstoff mit einer Korngröße von 0,1 bis etwa 2 mm aufgebaut. Vorzugsweise können Epoxy-, Polyurethan-, Phenol-, Harnstoff- oder Melaminharze verwendet werden. Ebenso sind vernetzende Polyvinylacetat-,Polyvinylchlorid-oder Acrylatlösungen oder Pasten einsetzbar. Als Füllstoffe eignen sich z.B. Quarzsand oder Siliziumcarbid in der entsprechenden Korngröße.

Ein derartiges Haftvermittlersystem kann auch direkt auf dem Holz aufgetragen und für die Verbindung im Spritzguß herangezogen werden, wirkt jedoch bei etwas dickeren Kunststoffteilen nicht dem Schrumpf und damit dem Verzug der Verbundteile entgegen.

Vorzugsweise wird zur Herstellung eines Kunststoff-Holz-Verbundteiles eine Kunststoffmasse mit geringer Verarbeitungsschwindung eingesetzt, wie z.B. mit Mineralpulvern oder -fasern, Glasfasern, Glimmer-Titandioxyd- oder Kreidepigmenten gefüllte thermoplastische Composits mit Füllstoffgehatlen von 10 bis 50 Gew.%. Als Polymermaterial können alle fließfähigen und thermoplastisch im Spritzguß verarbeitbaren Rohstoffe verwendet werden, insbesondere Polyolefine, Polyamide, Polyester, Polycarbonate, Polyether und Blends.

Gefülltes ABS oder Polyphenylenethercompositmaterialien zeigen dabei die geringste Verarbeitungsschwindung und eignen sich auch für die Herstellung aufwendig geformter Verbundteile.

Besonders vorteilhaft sind mit dem beschriebenen erfindungsgemäßen Verfahren die preiswerten, sowie mechanisch und temperaturmäßig hoch belastbaren thermoplastischen Composits auf der Basis von Polypropylen und entsprechenden Blends einsetzbar.

Zur Herstellung von leichten geschäumten Verbundteilen lassen sich vorteilhaft treibmittelhaltige Kunststoffkomponenten in ein- oder zweikomponentigen Spritzgußverfahren einsetzen. Die Schäumung kann dabei auch zum Ausgleich des Schrumpfes und Aufhebung des Verzugs von Verbundteilen herangezogen werden.

Eine Variante dieses Verfahrens, die das Problem der Verarbeitungsschwindung der Kunststoffmasse umgeht, ist das Aufspritzen des thermoplastischen Materials auf eine Vlies-oder Gewebeschicht mit anschließender Verklebung zum Holzteil oder Furnierholz.

Erfindungsgemäß sind dabei unter Einstellung passender Verarbeitungsbedingungen die gleichen Gewebe- oder Vliesarten und Klebstoffe einsetzbar, vorzugsweise jedoch Baumwoll-, Wolle-,Polyestermischgewebe oder stabile Zellstoffvliese in einer Stärke von 100 bis 500 g/m² und unter Verwendung eines flüssigen bis pastösen Klebstoffs auf der Basis von Epoxy-, Polyurethan-, Acrylat- oder vernetzten Kautschukharzen.

Dabei ist zu beachten, daß die Verarbeitungsbedingungen der Kunststoffmasse so eingestellt werden, daß kein Durchschlag durch das hinterspritzte Gewebe oder Vlies entsteht.

Der Spritzvorgang selber kann nach bekannten und den beschriebenen Verfahren zur Verbindung von Gewebe mit Kunststoff im Spritzgußverfahren erfolgen.

Die nach dem erfindungsgemäßen Verfahren aus Kunststoff und Furnierholz hergestellten Verbunde lassen sich schneiden, schleifen und lackieren. Sie besitzen hohe mechanische Festigkeiten, Temperaturbeständigkeiten und Temperaturwechselbeständigkeiten.

Ihre Anwendung liegt vorzugsweise im Automobilbereich, im Wohnmobil-, im Boots- und - mit beigeschäumten Kunststoffteilen - auch im Flugzeugbau. Ein großes Anwendungsfeld bietet auch die Herstellung preiswerter und beständiger furnierholzverkleideter Kunststoffteile im Möbel- und Wohnungsbau, die bei Verwendung geeigneter Kunststoffmassen auch nicht brennbar herstellt werden können.

## Patentansprüche

1. Verfahren zum Verbinden von Holzwerkstoff mit Kunststoff mit Hilfe eines Klebers und einer Verankerungsschicht zwischen den miteinander zu verklebenden Flächen,
**dadurch gekennzeichnet,**
daß zunächst ein thermoplastisches Kunststoffmaterial auf die Verankerungsschicht aufgespritzt wird und das so erhaltene Verbundmaterial anschließend mit dem Holzwerkstoff verklebt wird.

2. Verfahren nach Anspruch 1,
**dadurch gekennzeichnet**,
daß als Verankerungsschicht ein Gewebe oder ein Vlies verwendet wird.

3. Verfahren nach Anspruch 1 oder 2,
**dadurch gekennzeichnet**,
daß die Verankerungsschicht grob gekörnte anorganische oder organische Füllstoffe enthält.

## Claims

1. A process for joining wood material to plastics with the aid of an adhesive and an anchoring layer between the surfaces to be stuck together,
**characterised in that** a thermoplastic plastics material is first sprayed onto the anchoring layer and the thus obtained composite material is subsequently stuck to the wood material.

2. A process according to Claim 1,
**characterised in that** a woven fabric or a fibrous web is used as the anchoring layer.

3. A process according to Claim 1 or 2,
**characterised in that** the anchoring layer contains coarse grained inorganic or organic filling materials.

## Revendications

1. Procédé pour lier un matériau en bois à de la matière plastique à l'aide d'une colle et d'une couche d'ancrage entre les surfaces à coller entre elles, caractérisé en ce qu'on projette tout d'abord par pulvérisation une matière thermoplastique sur la couche d'ancrage et l'on colle ensuite le matériau composite ainsi obtenu au matériau en bois.

2. Procédé selon la revendication 1, caractérisé en ce qu'on utilise comme couche d'ancrage un tissu ou un non-tissé.

3. Procédé selon la revendication 1 ou 2, caractérisé en ce que la couche d'ancrage contient de la matière minérale ou organique de charge à gros grain.
